# FASCICULE DE BREVET EUROPEEN

(11) **EP 0 781 937 B1**
(45) Date de publication et mention de la délivrance du brevet: **28.06.2000**
(21) Numéro de dépôt: 96120338.7
(22) Date de dépôt: 18.12.1996
(51) Int. Cl.: F16D 69/04

(54) **Procédé de fixation par collage de garnitures de friction sur un disque de support**
Verfahren zum Kleben von Reibbelägen auf einer Trägerscheibe
Method for bonding friction linings to a carrier disc

(30) Priorité: 27.12.1995 FR 9515520
(43) Date de publication de la demande: 02.07.1997
(73) Titulaire: VALEO, 75017 Paris (FR)
(72) Inventeur: Marchisseau, Michel, 87000 Limoges (FR); Verdure, Jean-Claude, 87240 Ambazac (FR)
(74) Mandataire: Lemaire, Marc

(56) Documents cités:
- EP-A- 0 386 652
- US-A- 3 798 403
- PATENT ABSTRACTS OF JAPAN vol. 018, no. 341 (M-1629) & JP 06 081868 A (TOYOTA MOTOR)

## Description

La présente invention concerne un procédé de fixation par collage de garnitures de friction de part et d'autre d'un disque métallique de support, notamment pour véhicule automobile, tel que décrit par exemple dans le document FR-A-2 164 139.

Dans ce document on dépose de la colle collant à chaud sur le disque métallique ou sur les garnitures de friction, puis on met en place les garnitures de friction dans une presse en montant sous pression ledit disque et lesdites garnitures de friction entre une butée et une contrebutée portées respectivement par un plateau de pression supérieur et un plateau de pression inférieur appartenant à la presse et enfin on chauffe ledit disque à l'aide de premiers moyens de chauffage.

En pratique les moyens de chauffage sont des moyens de chauffage à induction permettant un chauffage rapide du disque.

Ce procédé ne soumet pas la matière de friction à un chauffage élevé.

Comme indiqué dans ce document, l'opération ne dure que quelques secondes.

La Demanderesse s'est demandé s'il n'était pas possible de mieux maîtriser encore le chauffage de la colle.

Suivant l'invention, un procédé du type sus-indiqué est caractérisé en ce que la butée et la contrebutée appartiennent à des seconds moyens de chauffage des garnitures de friction et en ce que l'on chauffe plus rapidement, à l'aide des premiers moyens de chauffage, le disque métallique de support que les garnitures de friction à l'aide des seconds moyens de chauffage.

Par exemple la température atteinte par les premiers et seconds moyens de chauffage peut être la même, mais l'on met en action les seconds moyens de chauffage avec un décalage dans le temps (de manière différée dans le temps), par exemple de 30 secondes. En variante on chauffe plus vite le disque de support sa montée en température étant plus rapide que celle des garnitures de friction.

Ainsi la colle durcit avant que les garnitures de friction se dilatent.

En variante la température atteinte par les seconds moyens de chauffage, pour chauffer les garnitures de friction, est inférieure à la température atteinte par les premiers moyens de chauffage pour chauffer le disque de support. Tout cela dépend des applications et notamment de la nature de la colle.

L'écart de température étant par exemple de 40°.

On emploie par exemple une colle du type thermodurcissable. Le temps de chauffage dépend des applications et notamment de la température atteinte par les moyens de chauffage.

Ainsi avec une colle thermodurcissable, il faut par exemple 1 heure à 150° et 5 minutes à 200° pour bien contrôler le processus de collage.

Ainsi, les garnitures de friction étant également chauffées dans leur ensemble et ne risquant pas d'être détériorées par la température atteinte, on maîtrise bien la température entre les deux moyens de chauffage, en sorte que l'on contrôle bien le chauffage de la colle et les dilatations différentielles entre les garnitures et le disque. Après on laisse refroidir ou non l'ensemble collé dans la presse.

On notera qu'il n'y a pas besoin de chauffer par avance les garnitures de friction et que la température de chauffage des garnitures est bien entendu choisie pour que celles-ci ne soient pas dégradées. Le temps de chauffage est également choisi pour éviter une dégradation desdites garnitures.

Grâce à ce procédé on peut coller par points les garnitures de friction sur leur disque associé.

Les points de colle sont avantageusement déposés aux endroits où l'on avait l'habitude, auparavant, de fixer par rivetage les garnitures de friction sur le disque métallique.

Ainsi, grâce à l'invention, on peut déposer à l'aide d'une buse la colle horizontalement sur le disque ou les garnitures à des endroits précis.

Selon une autre caractéristique de l'invention, les seconds moyens de chauffage entourent les premiers moyens de chauffage en étant du type annulaire.

Ces seconds moyens de chauffage peuvent être dotés de canaux pour leur refroidissement.

Ainsi, lors du refroidissement, on contrôle mieux l'abaissement de température des garnitures de friction, ce qui est favorable à un bon collage et permet, notamment, de minimiser, comme lors de la période de chauffage, les effets de bilame se produisant entre les garnitures de friction et le disque de support, du fait que les garnitures de friction sont plus thermiquement isolantes que ne l'est le disque.

Le procédé selon l'invention est particulièrement avantageux dans le cas où le disque de friction présente des pales tripodes ayant de grandes zones centrales de portée.

Le dépôt par points de la colle ne nuit pas à la bonne progressivité du disque de support.

D'autres avantages apparaîtront à la lumière de la description qui va suivre et en regard des dessins annexés dans lesquels :
- la figure 1 est une vue en coupe axiale d'une friction d'embrayage équipée d'un disque de support et de deux garnitures de friction fixées par rivetage sur ledit disque ;
- la figure 2 est une vue partielle de la périphérie externe d'un disque de support sur lequel sont propres à être fixées par collage des garnitures de friction ;

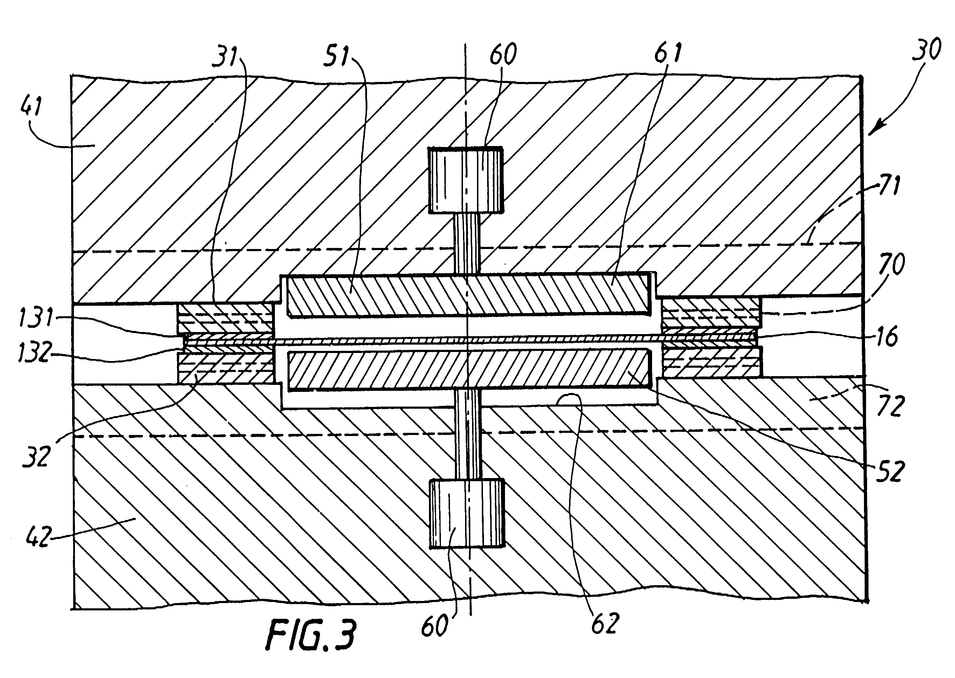

- la figure 3 est une vue schématique d'une presse permettant d'appliquer une pression et le chauffage selon le procédé de la présente invention ;
- la figure 4 est une demi-vue analogue à la figure 3 pour un autre exemple de réalisation.

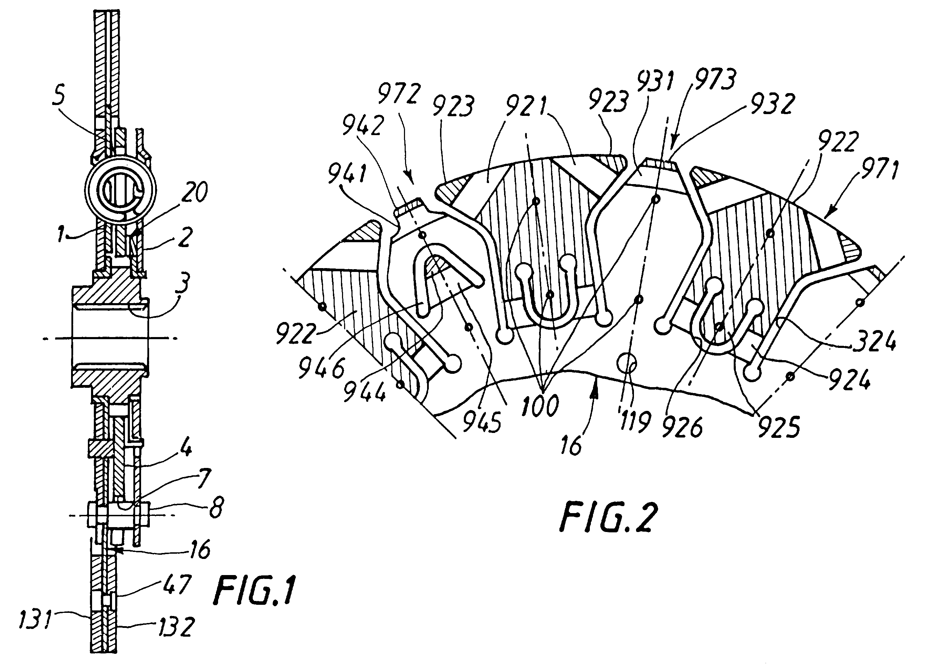

Dans les figures 1 et 2 on a représenté une friction d'embrayage et son disque de support 16.

Ainsi qu'on le sait, une friction d'embrayage comporte une partie d'entrée 16,131,132 accouplée à une partie de sortie 3.

La partie d'entrée 16,131,132 est propre à être serrée entre les plateaux de pression et de réaction d'un embrayage solidaires en rotation, éventuellement de manière élastique lorsque le plateau de réaction est en deux parties appartenant à un volant amortisseur, d'un arbre menant (l'extrémité du vilebrequin dans le cas d'une application à un véhicule automobile), tandis que la partie de sortie 3 consiste usuellement en un moyeu cannelé intérieurement pour sa liaison en rotation à un arbre mené (l'arbre d'entrée de la boîte de vitesses dans le cas d'une application à un véhicule automobile).

Normalement l'embrayage est engagé, l'élément d'entrée 16,131,132 étant serré entre les plateaux de pression et de réaction, en sorte que le couple est transmis de l'arbre menant à l'arbre mené.

Pour désengager l'embrayage il faut agir à l'aide d'une butée de débrayage sur l'extrémité du dispositif débrayeur que comporte l'embrayage - usuellement un diaphragme - pour faire cesser l'action de serrage et libérer l'élément d'entrée 16,131,132.

L'élément d'entrée 16,131,132 peut être couplé de manière rigide à l'élément de sortie 3 en étant par exemple fixé par rivetage sur un voile ou une bride solidaire du moyeu 3.

En variante, pour une bonne filtration des vibrations, l'élément d'entrée est accouplé de manière élastique à l'élément de sortie 3.

Par exemple (figure 1) l'élément d'entrée 16,131,132 est solidaire de deux rondelles de guidage 1,2 disposées de part et d'autre d'un voile 4 solidaire en rotation, éventuellement après rattrapage d'un jeu angulaire avec intervention de moyens d'engrènement à jeu, du moyeu 3 constituant l'élément de sortie. Des ressorts 9 à action circonférentielle sont logés dans des logements, le plus souvent des fenêtres, pratiqués en vis-à-vis dans les rondelles de guidage 1,2 et dans le voile 4. Des moyens élastiques à action axiale 20 interviennent également entre les rondelles de guidage 1,2 et le voile 4.

Ainsi dans un véhicule automobile l'embrayage constitue un organe de coupure et de démarrage entre le moteur et la boîte de vitesses et permet de filtrer les vibrations dans la chaîne cinématique allant de l'arbre moteur aux arbres de roue.

Une autre fonction est de veiller au confort des passagers en évitant toute brutalité lors du réengagement de l'embrayage.

Ainsi l'élément d'entrée 3,132,133 est du type progressif en étant élastique. A l'état "embrayage désengagé", l'épaisseur dudit élément d'entrée est plus grande qu'à l'état "embrayage engagé".

En pratique cet élément d'entrée comporte un disque de support 16 métallique comprenant une partie centrale 16 et une partie périphérique fractionnée en pales radiales élastiques propres à recevoir à fixation des garnitures de friction 131,132. Les pales présentent des zones décalées axialement par rapport à la partie centrale 16 et servant à la fixation des garnitures de friction 131,132.

Cette partie centrale 16 est par exemple (figure 1) fixée aux rondelles de guidage 1,2 à l'aide des colonnettes 8 reliant entre elles à fixation les rondelles de guidage 1,2 et traversant pour ce faire, à jeu circonférentiel, des ouvertures 7 du voile 4.

En variante le disque 16 et fixé à l'une des rondelles de guidage 1,2 par des rivets spécifiques.

La fixation des garnitures de friction 131,132 est réalisée usuellement à l'aide de rivets 47. Pour plus de précisions on se reportera par exemple au document EP-A-0 579 554.

Ainsi, lors de l'engagement de l'embrayage, on écrase progressivement les pales.

L'inconvénient de la fixation par rivetage est un accroissement d'épaisseur des garnitures 131,132 afin qu'une épaisseur suffisante de matière existe entre la face externe de la garniture de friction et la tête des rivets 47.

Il en résulte un accroissement d'inertie de la friction d'embrayage.

Pour cette raison il est intéressant de fixer directement par collage les garnitures de friction sur le disque de support.

Celui-ci peut présenter par exemple, figure 2, à sa périphérie externe, une alternance de pales 971 et de languettes 972,973 d'orientation radiale.

Les pales 971 sont du type tripodes et comportent une zone centrale de portée 922 décalée axialement par rapport à la partie centrale 16 du disque 16 et deux zones périphériques de portée 923 disposées de part et d'autre de la zone centrale 922 en étant décalées axialement par rapport à ladite zone centrale.

Des plis obliques 921, par rapport à l'axe de symétrie radiale de la pale 971, relient la zone centrale 922 aux zones périphériques de portée 923 Un pli tangentiel 924, perpendiculaire à l'axe de symétrie radial de la pale 971, relie la zone centrale 922 à la partie centrale du disque 16 présentant des trous 119 pour sa fixation par rivetage à la rondelle de guidage 1 de la figure 1.

La surface de zone centrale 922 est augmentée grâce à la formation d'une languette 925 formée à la faveur d'une fente en U 926 affectant le pli 924. La zone centrale 922 sert à la fixation de la garniture de friction 132 destinée à venir en contact avec le plateau de pression de l'embrayage.

Les zones périphériques de portée 923 sont propres à venir en contact avec l'autre garniture de friction 131 en étant ici dans le plan de la partie centrale du disque 16.

Les languettes 972,973 ont une partie principale dans le plan de la partie centrale du disque 16 et servent à la fixation de l'autre garniture 131 destinée à venir en contact avec le plateau de réaction se déformant moins que le plateau de pression sous l'effet de la chaleur.

Des fentes 324 séparent les languettes 972,973 des pales 971.

Les languettes présentent au moins une zone de portée 942,932 supplémentaire décalée axialement par rapport à leur partie principale pour contact avec l'autre garniture de friction 132.

Ces zones 942,932 se raccordent par des plis tangentiels 941,931 (perpendiculaires à l'axe de symétrie radial des languettes 972,973) à la partie principale desdites languettes souples.

En outre on peut former une zone de portée supplémentaire 944 dirigée axialement vers la garniture 132 à l'aide d'une fente 946 et d'un pli tangentiel.

Ici il s'agit donc de fixer directement par collage les garnitures 132,131 respectivement sur les zones de portées centrales des pales 971 et sur la partie principale des languettes 972,973 du disque de support métallique 16, et ce pour diminuer l'épaisseur des garnitures de friction et l'inertie de la friction d'embrayage.

Pour ce faire, de manière connue, on procède à un décapage desdites zones afin de favoriser l'adhérence de la colle.

Ce décapage peut être de nature mécanique, par exemple corindonnage, ou de nature chimique, par exemple trempage dans un bain d'acide. Ensuite on monte le disque 16 et les garnitures 131,132 dans une presse 30 après avoir préalablement enduit de colle le disque et/ou les garnitures 131,132 aux endroits voulus. Cette presse comporte un plateau de pression supérieur 41 et un plateau de pression inférieur 42 monté mobile axialement l'un par rapport à l'autre. Les plateaux de pression 41,42 présentent respectivement une butée 31 et une contrebutée 32 pour serrer l'ensemble garniture de friction 131,132 et disque métallique de support 16, pris en sandwich entre lesdites garnitures. Cette butée 31 et cette contrebutée 32 sont pourvues de moyens pour positionner les garnitures de friction 131,132.

Cette butée 31 ou cette contrebutée 32 peut également être dotée de moyens pour prépositionner le disque 16.

En variante, l'un des plateaux de pression 41,42 peut être conformé pour prépositionner ledit disque.

La colle est par exemple thermodurcissable, ici du type phénolique, et est propre à subir une polymérisation. Elle colle donc à chaud.

Plus précisément, le procédé de fixation par collage des garnitures de friction 131,132 de part et d'autre du disque métallique de support 16, notamment pour friction d'embrayage de véhicule automobile, comporte une étape dans laquelle on dépose de la colle collant à chaud sur ledit disque métallique ou sur les garnitures de friction 131,132, puis une étape dans laquelle on met en place les garnitures de friction 131,132 dans la presse 30 en montant sous pression ledit disque et lesdites garnitures de friction entre la butée 31 et la contrebutée 32 portées respectivement par le plateau de pression supérieur 41 et le plateau de pression inférieur 42 appartenant à la presse, et enfin on chauffe ledit disque à l'aide de premiers moyens de chauffage 51,52.

Ce procédé est caractérisé en ce que la butée 31 et la contrebutée 32 appartiennent à des seconds moyens de chauffage pour chauffer les garnitures de friction 131,132 et en ce que l'on chauffe plus rapidement, à l'aide des premiers moyens de chauffage 51,52 le disque métallique de support 16 que les garnitures de friction 131,132 à l'aide des seconds moyens de chauffage 31,32..

Cette opération de chauffage, conduisant à une fixation par collage des garnitures 131,132 sur le disque 16, a une durée par exemple de 5 mn à 200°.

Après ce chauffage on procède à une étape de refroidissement, toujours en maintenant sous pression les garnitures de friction et le disque. En variante le refroidissement est effectué à l'extérieur de la presse.

Plus précisément, grâce à l'invention, on dépose ici par points de la colle sur les zones de portée centrale 922 des pâles du disque et sur les zones principales des languettes 972,973.

Ce dépôt est effectué à l'aide d'une buse et est réalisé au point 100 servant auparavant à la fixation des garnitures 131,132 au disque 16 par les rivets 47.

Ces points sont bien matérialisés et, pour cela, on se reportera, par exemple, aux figures du document EP-A-0 579 554.

La mise sous pression de ces points de colle 100 évite que la colle ne parvienne aux plis 921,941,931, ce qui, dans ce cas, nuirait à la progressivité du disque 16 et à l'efficacité des languettes notamment des zones de portée supplémentaires 942,932.

Durant l'étape de mise sous pression le disque 16 est aplati du fait qu'il est comprimé entre les butées 31 et 32 via les garnitures 131,132.

La température atteinte par le disque de support 16 peut être par exemple de 200° et être identique à celle atteinte par les garnitures de friction 131,132. En variante la température atteinte par les garnitures de friction 131,132 peut être inférieure à celle atteinte par le disque de support 16.

La durée du chauffage s'explique notamment par le fait qu'il faut un certain temps pour élever la température des garnitures de friction 131,132 qui sont thermiquement isolantes. En outre cela permet de mieux contrôler la mise en température progressive des moyens de chauffage.

La différence de montée en température des moyens de chauffage permet de mieux contrôler le processus de collage en sorte que la colle durcie avant que les garnitures 131,132 se dilatent.

Le chauffage peut être réalisé par exemple par conduction.

Les premiers moyens de chauffage 51,52 comportent des plateaux chauffants 51,52, ici circulaires, portés respectivement par le plateau de pression supérieur 41 et le plateau de pression inférieur 42. Ces plateaux chauffants 51,52 sont soumis à l'action chacun d'un actionneur 60 permettant auxdits plateaux 51,52 de venir en contact avec les faces supérieures et inférieures du disque 16. Le chauffage du disque 16 peut être réalisé par conduction. Chaque actionneur 60 et porté par le plateau de pression 41,42 concerné.

On voit que les seconds moyens de chauffage 31,32 consistent ici en des blocs chauffants de pression, montés de manière fixe sur leurs plateaux de pression 41,42 associés. Ils entourent les premiers moyens de chauffage 51,52 en étant de forme annulaire.

Chaque plateau 41,42 est creusé centralement en 61,62 pour que les plateaux 51 et 52 puissent se déplacer axialement lorsque les garnitures 131;132 et le disque sont serrés entre la butée 31 et la contrebutée 32 chauffantes.

Les seconds moyens de chauffage 31,32 peuvent être chauffés électriquement tout comme les premiers moyens de chauffage 51,52, en sorte que dès que l'on coupe le courant électrique, le chauffage est interrompu. Les seconds moyens de chauffage 31,32 peuvent agir temporellement en différé. En variante la montée en température des seconds moyens de chauffage est moins rapide que ne l'est celle des premiers moyens de chauffage.

Après on rentre alors dans une phase de refroidissement au cours de laquelle les garnitures 131,132 et le disque 16 sont par exemple toujours maintenus sous pression, ici avec la même pression.

En pratique le disque métallique 16 se refroidit plus rapidement que les garnitures 131,132.

Il en résulte donc un refroidissement différentiel et un effet de bilame.

Pour remédier à cela, il est prévu de refroidir les garnitures 131,132 à l'aide des seconds moyens de chauffage 31,32. Plus précisément, la montée en température et le refroidissement sont effectués de manière graduelle selon les applications.

Ces seconds moyens de chauffage présentent par exemple, en leur sein, des canaux 70 permettant un refroidissement rapide des garnitures 131,132 par circulation d'un fluide de refroidissement dans les canaux 70. Le fluide peut être de nature gazeuse ou liquide.

Après cette opération, on écarte les plateaux 41,42 l'un par rapport à l'autre, des actionneurs étant prévus pour déplacer au moins l'un des deux plateaux, puis on extrait l'ensemble collé disque16-garnitures 131,132, le disque 16 reprenant alors sa forme de repos dans laquelle les garnitures 131,132 sont écartées l'une de l'autre. Lors de cette opération de refroidissement, on peut couper les premiers moyens de chauffage 51,52 avant les seconds 31,32.

Ainsi qu'on l'aura compris, grâce à l'invention on maîtrise bien le phénomène de collage et la température atteinte par les garnitures 131,132 est telle que celles-ci ne subissent pas de dégradation. La durée du chauffage permet également aux garnitures de ne pas se dégrader.

Pour améliorer encore cette maîtrise, il est prévu de monter la butée 31 et la contrebutée 32 de pression sur des plaques thermiquement isolantes 71,72 solidaires respectivement du plateau de pression supérieur 41 et du plateau de pression inférieur 42.

Grâce à cette disposition, on isole les moyens de chauffage de la masse des plateaux 41,42, ce qui permet de contrôler encore plus finement le collage.

Bien entendu, la présente invention n'est pas limitée à l'exemple de réalisation décrit, en particulier les pales tripodes peuvent avoir une forme différente, par exemple l'une des formes décrites dans le document EP-A-0 579 554, sachant évidemment que les trous pour les passages des rivets constituent des points où l'on procède au collage, lesdits trous étant supprimés. Ainsi les pales peuvent être toutes du type tripode et, à la figure 2, ce n'est qu'à titre d'exemple qu'on a représenté deux types différents de languettes 972,973, le disque 16 étant généralement équipé d'un seul type de languette.

Grâce au collage, de manière précitée, on peut diminuer l'épaisseur des garnitures de friction 131,132.

Bien entendu, l'invention s'applique à n'importe quel type de disque de support progressif, les pales pouvant ne pas être du type tripode. Il est possible de faire varier la pression entre les opérations de chauffage et de refroidissement.

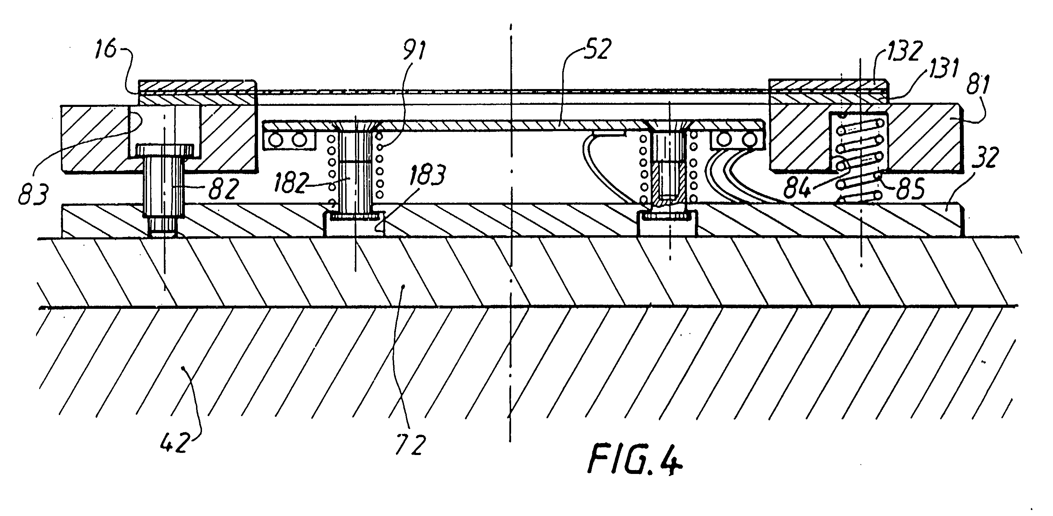

Les moyens de chauffage peuvent être aménagés de manière différente notamment au niveau de la partie inférieure de la presse comme visible à la figure 4. Dans cette figure une plaque 81, mobile axialement, est associée à la contre butée 32 consistant en un plateau chauffant électriquement et s'étendant en dessous de la partie basse 52 des premiers moyens de chauffage 51, 52. La plaque 81 est mobile axialement grâce à des colonnettes 82 vissées dans le plateau 32 alimenté électriquement pour chauffage de la garniture 131 via la plaque 81 thermiquement conductrice, ici métallique.

Les têtes des colonnettes 82 sont montées dans des lamages 83 de la plaque 81 servant de support à la garniture de friction 131.

La plaque 81 présente par ailleurs des trous borgnes 84 pour montage de ressorts de rappel 85, ici des ressorts à boudin, prenant appui sur le plateau chauffant 32 et le fond du trou borgne 84. Les ressorts 85 et les colonnettes 82 sont réparties régulièrement circonférentiellement de manière alternée.

Les premiers moyens de chauffage 51, 52 comportent un plateau chauffant 52 alimenté électriquement et mobile axialement à l'aide de colonnettes 182 et de ressorts de rappel 91 de la même manière que la plaque 81. Plus précisément les colonnettes 182 ont une tête montée dans un lamage 183 du plateau 32 et un pied épanoui pour fixation de la colonnette 183 au plateau 52, ici mince pour permettre un chauffage rapide du disque 16. Le plateau 52 est alimenté électriquement.

La plaque 81, plus épaisse que le plateau 52, entoure ledit plateau 52.

Ainsi qu'on l'aura compris les colonnettes 82, 182 sont montées tête-bêche, les têtes des colonnettes 82, 182 limitant le mouvement axial respectivement de la plaque 81 et du plateau 52 par coopération avec le fond des lamages 83, 183. Ainsi qu'on l'aura compris la plaque 81 élève les garnitures de friction 131, 132 ainsi que le disque de support 16 dès que l'on ouvre la presse. Il est ainsi créé une rupture de conduction thermique entre les garnitures 131, 132 et les seconds moyens de chauffage proprement dits 31, 32 et entre le disque 16 et les premiers moyens de chauffage 51, 52, le déplacement axial du plateau 52 étant inférieur à celui de la plaque 81.

Comme à la figure 2 une plaque thermiquement isolante 72 est associée au plateau 32 pour l'isoler de la partie inférieure de la presse.

Ainsi qu'on l'aura compris on peut contrôler la montée en température de chaque moyen de chauffage en faisant varier par exemple l'intensité du courant électrique. Les matériaux des moyens de chauffage peuvent être différents. On peut jouer sur l'épaisseur des moyens de chauffage. De nombreux paramètres permettent donc de chauffer plus rapidement le disque de support.

## Revendications

1. Procédé de fixation par collage de garnitures de friction (131,132) de part et d'autre d'un disque métallique de support (16); notamment pour friction d'embrayage de véhicule automobile, dans lequel on dépose de la colle collant à chaud sur ledit disque métallique (16) ou sur les garnitures de friction (131,132), puis on met en place les garnitures de friction (131,132) dans une presse (30) en montant sous pression ledit disque et lesdites garnitures de friction entre une butée (31) et une contrebutée (32) portées respectivement par un plateau de pression supérieur (41) et un plateau de pression inférieur (42) appartenant à la presse (30), et on chauffe ledit disque (16) à l'aide de premiers moyens de chauffage (51,52), caractérisé en ce que la butée (31) et la contrebutée (32) appartiennent à des second moyens de chauffage des garnitures de friction (131,132), et en ce que l'on chauffe plus rapidement, à l'aide des premiers moyens de chauffage (51,52), le disque métallique de support (16) que les garnitures de friction (131,132) à l'aide des seconds moyens de chauffage (51,52)

2. Procédé selon la revendication 1, caractérisé en ce que les seconds moyens de chauffage (31,32) entourent les premiers moyens de chauffage (51,52).

3. Procédé selon la revendication 1 ou 2, caractérisé en ce que les seconds moyens de chauffage (31,32) sont pourvus de moyens de refroidissement (70).

4. Procédé selon la revendication 3, caractérisé en ce que lesdits moyens de refroidissement (70) consistent en des canaux permettant le passage d'un fluide de refroidissement.

5. Procédé selon l'une quelconque des revendications 1 à 5, caractérisé en ce que les seconds moyens de chauffage (31,32) sont de nature électrique.

6. Procédé selon l'une quelconque des revendications 1 à 5, caractérisé en ce que les premiers moyens de chauffage (51,52) comportent des plateaux chauffants (51,52) portés à mobilité axiale respectivement par le plateau de pression supérieur (41) et le plateau de pression inférieur (42).

7. Procédé selon la revendication 6, caractérisé en ce que lesdits plateaux (51,52) sont montés mobiles par l'intermédiaire d'actionneurs (60).

8. Procédé selon la revendication 7, caractérisé en ce que les plateaux de pression inférieur (42) et supérieur (41) sont creusés pour montage des premiers moyens de chauffage (51,52).

9. Procédé selon l'une quelconque des revendications 1 à 9, caractérisé en ce que les premiers moyens de chauffage (51,52) et les seconds moyens de chauffage (31,32) sont montés sur leurs plateaux de pression respectifs (41,42) par l'intermédiaire de plaques thermiquement isolantes (71,72).

10. Procédé selon l'une quelconque des revendications 3 à 9, caractérisé en ce qu'une plaque mobile axialement (81) est associée aux seconds moyens de chauffage (31,32).

11. Procédé selon la revendication 10, caractérisé en ce que les seconds moyens de chauffage (31,32) comportent un second plateau (32) s'étendant en-dessous d'un premier plateau (52) appartenant aux premiers moyens de chauffage (51,52).

12. Procédé selon la revendication 11, caractérisé en ce que la plaque (81) et ledit premier plateau (52) sont montés mobiles axialement à l'aide de colonnettes (82,182) associées au deuxième plateau (32) à l'encontre de ressorts de rappel (85,91).

13. Procédé selon l'une quelconque des revendications 1 à 12, caractérisé en ce que les seconds moyens de chauffage (31,32) interviennent de manière différée dans le temps.

14. Procédé selon l'une quelconque des revendications 1 à 12, caractérisé en ce que la montée en température des seconds moyens de chauffage (31,32) est moins rapide que celle des premiers moyens de chauffages (51,52).

## Claims

1. A method of fastening friction liners (131, 132) by adhesive bonding on either side of a metallic support disc (16), especially for a motor vehicle clutch friction wheel, wherein the hot melt adhesive is deposited on the said metallic disc (16) or on the friction liners (131, 132), and the friction liners (131, 132) are then placed in a press (30), the said disc and the said friction liners are mounted under pressure between a presser tool (31) and a backing tool (32) which are carried respectively by an upper pressure plate (41) and a lower pressure plate (42) of the press (30), and the said disc (16) is heated with the aid of first heating means (51, 52), characterised in that the presser tool (31) and the backing tool (32) are part of a second heating means for the friction liners (131, 132), and in that, with the aid of the first heating means (51, 52), the metallic support disc (16) is heated more rapidly than the friction liners (131, 132) are heated with the aid of the second heating means (31, 32).

2. A method according to Claim 1, characterised in that the second heating means (31, 32) surround the first heating means (51, 52).

3. A method according to Claim 1 or Claim 2, characterised in that the second heating means (31, 32) are provided with cooling means (70).

4. A method according to Claim 3, characterised in that the said cooling means (70) consist of channels for the passage of a coolant fluid.

5. A method according to any one of Claims 1 to 5, characterised in that the second heating means (31, 32) are electrical.

6. A method according to any one of Claims 1 to 5, characterised in that the first heating means (51, 52) comprise heating plates (51, 52) which are carried, with axial mobility, by the upper pressure plate (41) and the lower pressure plate (42) respectively.

7. A method according to Claim 6, characterised in that the said plates (51, 52) are mounted for displacement by actuators (60).

8. A method according to Claim 7, characterised in that the lower pressure plate (42) and upper pressure plate (41) are recessed for mounting the first heating means (51, 52).

9. A method according to any one of Claims 1 to 9, characterised in that the first heating means (51, 52) and the second heating means (31, 32) are mounted on their respective pressure plates (41, 42) by means of thermally insulating plates (71, 72).

10. A method according to any one of Claims 3 to 9, characterised in that an axially movable platen (81) is associated with the second heating means (31, 32).

11. A method according to Claim 10, characterised in that the second heating means (31, 32) comprise a second plate (32) arranged below a first plate (52) of the first heating means (51, 52).

12. A method according to Claim 11, characterised in that the platen (81) and the said first plate (52) are mounted for axial movement with the aid of posts (82, 182) associated with the second plate (32), against the action of return springs (85, 91).

13. A method according to any one of Claims 1 to 12, characterised in that the second heating means (31, 32) act in a differential manner over time.

14. A method according to any one of Claims 1 to 12, characterised in that the rise in temperature of the second heating means (31, 32) is slower than that of the first heating means (51, 52).

## Patentansprüche

1. Verfahren zur Klebebefestigung von Reibbelägen (131, 132) beiderseits einer Trägerscheibe aus Metall (16), insbesondere für die Reibungskupplungsscheibe eines Kraftfahrzeugs, bei dem heißklebender Klebstoff auf der besagten Metallscheibe (16) oder auf den Reibbelägen (131, 132) aufgetragen wird, woraufhin die Reibbeläge (131, 132) in eine Presse (30) eingelegt werden, wobei die besagte Trägerscheibe und die besagten Reibbeläge unter Druck zwischen einem Anschlag (31) und einem Gegenanschlag (32) eingesetzt werden, die an einer oberen Druckplatte (41) bzw. an einer unteren Druckplatte (42), die zu der Presse (30) gehören, angebracht sind, und woraufhin schließlich die besagte Trägerscheibe (16) mit Hilfe von ersten Heizmitteln (51, 52) erhitzt wird, **dadurch gekennzeichnet,** daß der Anschlag (31) und der Gegenanschlag (32) zu zweiten Heizmitteln zum Erhitzen der Reibbeläge (131, 132) gehören und daß die Metallträgerscheibe (16) mit Hilfe der ersten Heizmittel (51, 52) schneller als die Reibbeläge (131, 132) mit Hilfe der zweiten Heizmittel (31, 32) erhitzt wird.

2. Verfahren nach Anspruch 1, **dadurch gekennzeichnet**, daß die zweiten Heizmittel (31, 32) die ersten Heizmittel (51, 52) umgeben.

3. Verfahren nach Anspruch 1 oder 2, **dadurch gekennzeichnet**, daß die zweiten Heizmittel (31, 32) mit Abkühlungsmitteln (70) versehen sind.

4. Verfahren nach Anspruch 3, **dadurch gekennzeichnet**, daß die besagten Abkühlungsmittel (70) aus Kanälen bestehen, die den Durchfluß eines Kühlmittels ermöglichen.

5. Verfahren nach einem der Ansprüche 1 bis 4, **dadurch gekennzeichnet**, daß die zweiten Heizmittel (31, 32) elektrische Mittel sind.

6. Verfahren nach einem der Ansprüche 1 bis 5, **dadurch gekennzeichnet**, daß die ersten Heizmittel (51, 52) Heizplatten (51, 52) umfassen, die axial beweglich an der oberen Druckplatte (41) bzw. an der unteren Druckplatte (42) angebracht sind.

7. Verfahren nach Anspruch 6, **dadurch gekennzeichnet**, daß die besagten Heizplatten (51, 52) über Betätigungsvorrichtungen (60) axial beweglich gelagert sind.

8. Verfahren nach Anspruch 7, **dadurch gekennzeichnet**, daß die untere (42) und die obere Druckplatte (41) für das Einsetzen der ersten Heizmittel (51, 52) ausgetieft sind.

9. Verfahren nach einem der Ansprüche 1 bis 8, **dadurch gekennzeichnet,** daß die ersten Heizmittel (51, 52) und die zweiten Heizmittel (31, 32) an ihren jeweiligen Druckplatten (41, 42) über wärmeisolierende Platten (71, 72) angebracht sind.

10. Verfahren nach einem der Ansprüche 3 bis 9, **dadurch gekennzeichnet,** daß eine axial bewegliche Platte (81) mit den zweiten Heizmitteln (31, 32) verbunden ist.

11. Verfahren nach Anspruch 10, **dadurch gekennzeichnet,** daß die zweiten Heizmittel (31, 32) eine zweite Heizplatte (32) umfassen, die sich unterhalb einer ersten Heizplatte (52) erstreckt, die zu den ersten Heizmitteln (51, 52) gehört.

12. Verfahren nach Anspruch 11, **dadurch gekennzeichnet,** daß die Platte (81) und die besagte erste Heizplatte (52) anhand von mit der zweiten Heizplatte (32) verbundenen Distanzbolzen (82, 182) axial beweglich entgegen Rückstellfedern (85, 91) gelagert sind.

13. Verfahren nach einem der Ansprüche 1 bis 12, **dadurch gekennzeichnet**, daß die zweiten Heizmittel (31, 32) zeitlich versetzt wirksam werden.

14. Verfahren nach einem der Ansprüche 1 bis 12, **dadurch gekennzeichnet**, daß der Temperaturanstieg der zweiten Heizmittel (31, 32) weniger schnell als derjenige der ersten Heizmittel (51, 52) erfolgt.
